Europäisches Patentamt
European Patent Office
Office européen des brevets

(11) Publication number: 0 058 513
A2

(12) # EUROPEAN PATENT APPLICATION

(21) Application number: 82300658.0

(22) Date of filing: 10.02.82

(51) Int. Cl.$^3$: C 09 J 5/00

(30) Priority: 17.02.81 US 234473

(43) Date of publication of application: 25.08.82 Bulletin 82/34

(84) Designated Contracting States: BE DE FR GB NL SE

(71) Applicant: DENTSPLY INTERNATIONAL, INC.
570 West College Avenue
York Pennsylvania 17405(US)

(72) Inventor: Gonser, Donald I.
1749 Crescent Road
York Pennsylvania 17403(US)

(74) Representative: Newens, Leonard Eric et al,
F.J. CLEVELAND CO. 40/43 Chancery Lane
London WC2A 1JQ(GB)

(54) **Demand set fixturing process.**

(57) Demand set fixturing processes are provided for fixedly maintaining a preselected spatial orientation among a plurality of objects. According to a preferred embodiment, fixturing of a first object (18) relative to a second object (12) is accomplished by contacting said first and second objects (12, 18) with at least one portion of an actinic light polymerizable composition (24), positioning said objects (12, 18) relative to each other to attain a preselected spatial orientation and irradiating said portion with actinic light for a time sufficient to cause polymerization of said composition (24) thereby fixedly maintaining said preselected orientation.

FIG. 2

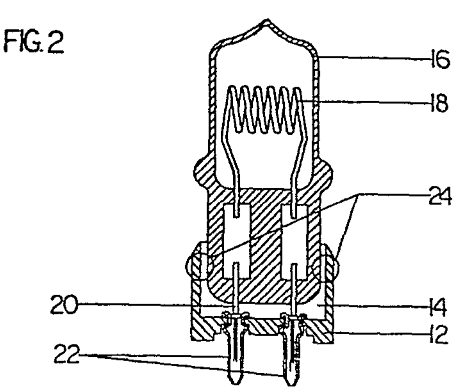


EP 0 058 513 A2

INCOMPLETE DOCUMENT

## Background of the Invention

### Field of the Invention

This invention is directed to manufacturing and other processes employing demand settable adhesives. More particularly, this invention relates to processes for fixturing, assemblying, repairing, and otherwise operating upon articles with adhesive compositions which are polymerizable upon demand using actinic light.

In the manufacturing of articles, it is frequently necessary to cause two or more object to be joined together in a preselected spatial orientation. Frequently, it is also necessary to ensure that such spatial relationship is accurate to a high tolerance. Such accuracy may be demanded, for example, in optical, electronic, acoustic, mechanical and other systems where the spatial relation or "alignment" may be critical to proper operation, performance and control of the resulting articles. Such criticality is especially evident in optical and electrooptical articles such as optical scanning, viewing and detecting devices; lasers; vacuum tubes; fiber optic devices; lamp filament positioning, and many others. Those skilled in the art will readily appreciate the necessity for precise alignment of such systems.

Such persons will also recognize that present processes for accomplishing such alignment are relatively inefficient and costly and that, accordingly, new processes and methods for accomplishing this goal are highly desired.

It has also been desired to provide means of repairing optical, electrooptical, and other systems in a fashion which is suited to the preservation of alignment and to the maintenance of desired optical, acoustic, and other physical properties.

Objects of the Invention

It is an object of this invention to provide processes for the joining of objects together while maintaining among such objects a preselected spatial relationship or orientation. It is a further object to provide processes for the repair of objects while maintaining the alignment thereof. A further object is to provide fixturing, assembling, repairing, and other processes for articles, which processes are adapted to the maintenance of desired optical, electronic, acoustic, and other physical properties of such articles. It is also desired to furnish such processes which are efficient and cost effective. Yet another object to provide such processes which employ demand settable adhesives which are polymerizable using actinic light. These and other objects may be accomplished for the use of one or more embodiments

of this invention.

Brief Description of the Drawings

Fig. 1 is an exploded view of an incandescent lamp such as is used in projection and other devices; Fig. 2 shows the lamp preparatory to alignment. Fig. 3 illustrates the lamp of Fig. 2 in the process of being fixtured according to the processes of this invention

Fig. 4 shows a fixtured array of optical wave guides and a grooved mandrel therefore in cross section.

Fig. 5 illustrates an assembly of fiber optic elements.

Summary of the Invention

It has been found that rapid, efficient, and effective fixturing of pluralities of objects may be accomplished employing demand settable adhesives using active light. More particularly, a process for fixturing a first object relative to a second object has been found comprising the steps of contacting said first object and said second object with at least one portion of an actinic light polymerizable composition, positioning said objects relative to each other to attain a preselected spatial orientation among them, and irradiating said portion with actinic light for a period of time sufficient to cause substantial polymerization of the composition thereby fixedly maintaining said orientation.

Additionally, it has been found that actinic light polymerizable compositions may be employed to modify or repair waveguides or waveguide arrays. Accordingly, this invention provides a method for the repair of a waveguide array having a structural void on the surface thereof comprising the steps of applying to said void an actinic light polymerizable composition and exposing said composition to actinic light for a period of time effective to polymerize said composition thus to fill the void.

Detailed Description of the Invention

The fixturing processes of this invention are conveniently illustrated by reference to the drawings. Fig. 1 illustrates an incandescent lamp as a "blow-up" of its subassemblies. Thus, the lamp may be viewed as comprising an envelope bulb unit 10 and a base assembly 12 having a cavity 14 for the insertion of the bulb. Fig. 2 shows a different view of the lamp of Fig. 1 after the bulb and base subassemblies have been conjoined. Thus, the bulb comprises a glass envelope 16, a filament 18, leads 20 and contact pins 22. It is frequently necessary to effect a precise optical alignment between the filament 18 via the bulb 16 and the base 12. According to this invention, this goal is attained by placing portions of an actinic light polymerizable composition 24 in contact with both the bulb and the base. Subsequent positioning of the base 12 and the bulb 16 relative to each other is performed to attain a preselected spatial orientation thereof. Irradiation of the polymerizable composition with actinic light for a time sufficient to cause polymerization of this composition results in the fixed maintenance of the spatial orientation. These figures demonstrate the use of discrete portions of an actinic light polymerizable composition to effect the fixturing of the lamp. Following this fixturing, it is possible to employ additional quantities of cementing, filling, or adhesive compositions further to fill the cavity 14 and to provide a firmer bond between the bulb and base. It is also within the scope of this invention to employ amounts of actinic light polymerizable compositions which are sufficient to fill fully the cavity 14 and thus, firmly to bond the lamp subassemblies in one step.

Fig. 3 depicts a preferred procedure for fixturing such a lamp of Figs. 1 and 2 according to this invention. Thus, the bulb 16 and base 12 are placed in close proximity to each other and preferably held, for example, in a clamp 26. Portions of actinic light polymerizable composition 24 are placed in contact with both the bulb and the base which are then positioned relative to each other to attain a preselected spatial orientation. A light source 28 preferably having an activating means 30, is positioned so that light

can be directed through a light exit port 32 toward the composition 24. The light source is activated and light is applied to the composition for a time sufficient to effect polymerization thereof and to result in hardening, thus fixedly to maintain the preselected spatial orientation of bulb 16 and base 12.

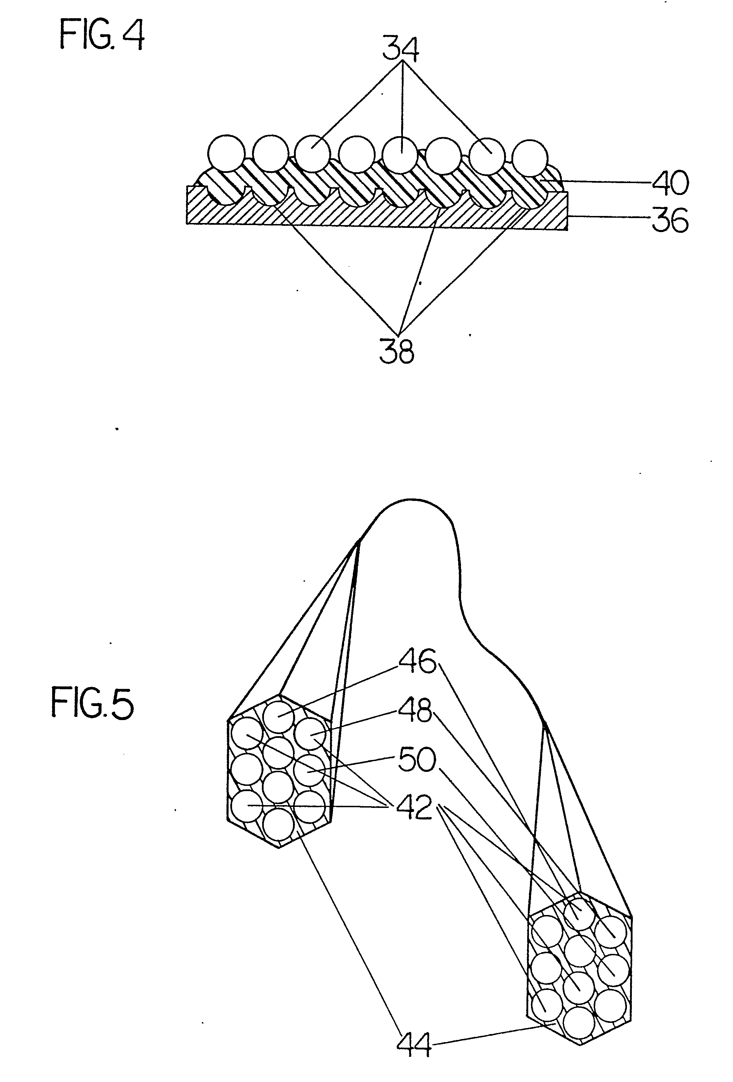

Another example of fixturing according to this invention is shown in Fig. 4. It is desired to maintain fixedly a preselected orientation of a collection of fiber optic filaments or other waveguides 34 <u>inter se</u>. Such oriented arrays find wide use in fiber optic devices such as office copiers, cameras, sensors, medical examining equipment and the like. Thus, the fibers 34 may be placed upon a form, mandrel, or base 36 which may, optionally, have spacing means 38 thereupon for effecting a fixed spacing of the fibers. A portion of actinic light polymerizable material is applied to the collection of guides which are then repositioned or adjusted as necessary to maintain the preselected orientation. The polymerizable material is then exposed to actinic light for a period of time effective to cause polymerization thereof and to result in the fixed maintenance of the preselected orientation of the guides in the array. It will be appreciated that numerous orientations of such fibers may be preselected and that layers, bundles, and other complex

forms thereof may be fabricated. It will also be appreciated that the base or mandrel may assume any convenient shape and that it may either be discarded after fixturing or retained as part of the resulting array.

According to a preferred embodiment, sufficient actinic light curable material is applied to the array of fibers such that, after hardening, the fibers are firmly embedded within the material. Alternatively, it is possible to employ an amount of polymerizable material which is sufficient for maintenance of the spatial orientation of the fibers. After fixturing, the entire collection or array may, if desired, be "potted" in a convenient medium as will be appreciated by those skilled in the art.

Fig. 5 shows yet another example of fixturing according to this invention. Optical fibers 42 may be positioned into a preselected spatial orientation such as to form a coherent bundle and then contacted with an actinic light polymerizable composition 44. After exposure of the composition 44 to actinic light and the resulting polymerization thereof, the bundle of fibers may be employed in numerous fiber optic devices. It will be appreciated that the relative spatial orientation of individual fibers such as 46, 48, and 50 may be maintained throughout the length of the fiber bundle through this process. As before, it is preferred to

employ sufficient actinic light polymerizable composition to enable embedding of the fiber bundle within such composition. Alternatively, a two step fixturing-potting sequence may be employed.

Those skilled in the art will appreciate that numerous other fixturing and manufacturing processes may benefit from the employment of the novel processes of this invention. Accordingly, waveguiding devices in forms other than fibers may be assembled into arrays in manners similar to those described above. Thus, planar waveguides may be so aggregated. Similarly, numerous objects requiring careful control of spatial orientation may be joined together employing the fixturing processes of this invention. For example, these processes may be employed to "tack" together objects prior to final assembly. Thus, such objects may be joined together employing actinic light curable compositions preparatory to the insertion of other joining means such as bolts, screws, conventional adhesives or even further amounts of light curable adhesives. It is contemplated that any group of two or more objects may be contacted with at least one portion of an actinic light polymerizable composition, positioned relative to each other to attain a preselected spatial orientation and irradiated with actinic light for a period of time sufficient to cause polymerization of the

composition and fixed maintenance of the preselected orientation.

This invention also contemplates the repair of certain objects, especially waveguides and waveguide arrays. Frequently, such waveguide or waveguide arrays develop pits, cracks, nicks, cuts, or other structural voids on one or more surfaces thereof. Such voids may diminish the performance characteristics of such waveguides or arrays. Accordingly, this invention is drawn to a method of repair of such waveguide arrays having one or more structural voids on a surface thereof. Such repair processes comprise the steps of applying to the void an actinic light polymerizable composition and exposing such composition to actinic light for a period of time effective to polymerize the composition, whereby the void is substantially filled with the polymerized compositions. By judicious choice of the polymerizable composition, good bonding with the waveguide or waveguide array may be had and interference with the optical characteristics of the array minimized.

This repair process is particularly useful in the repair of optical waveguide arrays used in office copiers and the like. Such arrays are frequently nicked by staples, paperclips, and other objects; such nicks and other voids result in imperfections in the operation of the optical

systems involved. By applying an actinic light polymerizable composition to the void and by polymerizing the same through exposure of the composition to actinic light for a period of time sufficient to polymerize the composition, the void may be filled and the optical array returned to service.

The actinic light curable compositions useful in the practice of this invention are preferably those disclosed in the application of Koblitz et al entitled Radiation Curable Silaneous Adhesives, filed on 17th February 1981 under United States Application Serial No. 233,951 which application is incorporated herein by reference to provide, inter alia, a full description of preferred actinic light curable compositions.

It is preferred to employ actinic light polymerizable resins comprising at least 20% by weight of certain polymerizable silanes and related species and up to 80% by weight of a polymerizable ethylenically unsaturated material and an amount of a photosensitizing system effective to cause polymerization of the composition when it is exposed to actinic light. Such compositions may also comprise organic or inorganic fillers and other modificants.

The silanes which are preferred for use in the compositions used in the practice of this invention are any of those silanes which contain functionalities which participate in photochemical polymerization. In general, such silanes

have one or more reactive ethylenic unsaturations. Such unsaturations include, for example, vinyl, allyl, "dienyl", "dienyl", acetylenyl, acrylyl, methacrylyl, other acrylic homologs, and many other reactive ethylenic functionalities. Preferably, such silanes belong to the class of acrylosilanes, which class includes methacrylic and homologous species. Such families may be represented by the formula:

I. 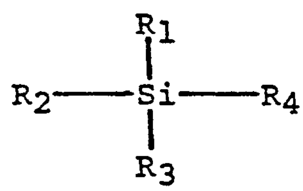

where $R_1$ - $R_4$ are the same or different and may be H, alkyl, alkenyl, aryl, aralkyl, alkaryl, alkoxy, vinyl, aryloxy, acyloxy, etc. having from 1 to about 40 carbon atoms and where at least one of $R_1$ - $R_4$ is alkyl, aryl, aralkyl, alkaryl having from 1 to about 40 carbon atoms and being substituted with at least one group having formula II:

II. 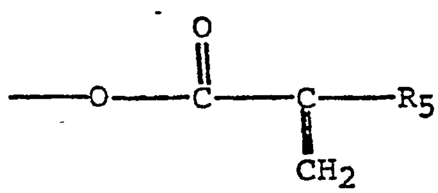

where $R_5$ is H, alkyl, alkenyl, or phenyl having from 1 to about 6 carbon atoms.

Another family of silane species which is useful in the compositions used in the practice of this invention include those light polymerizable silanes which have non-acrylic

photochemically reactive ethylenic unsaturations. Accordingly, such family may be represented by formula I:

I. 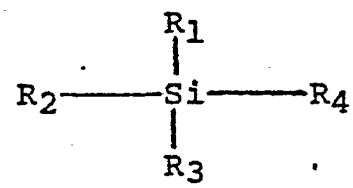

where $R_1 - R_4$ have the meanings suscribed to them previously and at least one of $R_1 - R_4$ has the formula:

III. $-R_6-CH=CH_2$

where $R_6$ is alkyl, aryl, aralkyl, or alkaryl having from 1 to about 30 carbon atoms. While formula III discloses a terminal ethylenic unsaturation, those skilled in the art will easily recognize that compounds having internal ethylenic unsaturations may also be suitable for the practice of one or more embodiments of the present invention. This family will be recognized to include vinyl, allyl, and other ethylenically unsaturated silanes. It should be appreciated that others of groups $R_1 - R_3$ may also include one or more of such reactive ethylenic unsaturations.

Those skilled in the art will recognize that the above descriptions of silaneous materials preferred for inclusion in the compositions used in the processes of this invention is, of necessity, limited. Such persons will understand that numerous ethylenically unsaturated silane compounds exist which are photochemically polymerizable and

will easily be able to ascertain which of such compounds are suitable for inclusion in one or more preferred embodiments of the invention. Furthermore, mixtures of two or more of such silane compounds may be so employed.

Since most silane compositions available commercially have been treated with one or more inhibitors to suppress autopolymerization during storage, and since such inhibitors have been found to retard or prevent rapid photopolymerization, it is may be necessary to remove most or all of such inhibitors from silane species for use in the practice of this invention.

The polymerizable resins preferred for the formulation of the polymerizable compositions used in this invention preferably comprise at least 20% by weight of at least one of the silanes which have been described hereinabove. Alternatively, it is possible for such resins to comprise up to 100% of such silanes as well. Accordingly, amounts of silane varying from about 20% to about 100% by weight are preferred. More preferred are resins employing from about 40% to about 95% by weight of such silanes. Even more preferred are resins having from about 60% to about 90% of such silanes.

It has been found to be especially preferred to employ amounts of silane in the adhesives of this invention

which are greater than about 50% by weight. Such adhesives exhibit particularly good physical properties at elevated temperatures. It is even more preferred to employ from about 60% to about 90% of such silanes for high temperature fixturing and other uses.

The polymerizable resins used to formulate the preferred polymerizable compositions of this invention may, in addition to the silane species, also contain up to about 80% of a polymerizable, ethylenically unsaturated material which does not contain silicon. Thus, from 0% to about 80%, and preferably from about 5% to about 60% of such ethylenically unsaturated, polymerizable materials may be added. It is even more preferred to employ from about 10% to about 40% of such compounds. Preferred reactive, ethylenically unsaturated materials for the practice of this invention include the acrylic, methacrylic, ethacrylic, etc. esters of various alcohols and other hydroxyl containing polymers and prepolymers. Also useful, are vinyl, allyl, styryl, "enyl", "dienyl", acetylenyl, and numerous other reactive, ethylenically unsaturated species. Preferred for use for the practice of the invention are the acrylic and lower alkyl acrylic acid esters, such as the acrylates and methacrylates. Preferred among these are the acrylic, methacrylic, etc. esters of bisphenol-A and its epoxy resins, and related

materials. The acrylic esters of 2,2-bis(4-hydroxy-2,3,5,6-tetrafluorophenyl)propane are also preferred.

The preferred polymerizable compositions of this invention also comprise an amount of a photosensitizing system effective to cause polymerization of the adhesive when it is exposed to actinic light. Such photosensitizing system may comprise any of those compounds which are capable of initiating such photopolymerization. Thus, the photosensitizing system may comprise sensitizing species for visible, ultraviolet, or other actinic light. For the practice of some embodiments of the invention, such photosensitizing system comprises an alpha diketone together with an amine. Such alpha diketones (also known as alpha-beta diketones) may be any of those alpha diketones capable of initiating photopolymerization in the polymerizable adhesive systems of this invention. Of these, camphoroquinone, benzil, biacetyl, 9,10-phenanthrenequinone, and 1,2-naphthoquinone have been found to be preferred. Most preferred is camphoroquinone. Numerous amines have been found to be useful when joined with alpha diketones in photosensitizing systems. Such amines as tributylamine, tripropylamine, etc. may be employed. Preferred species include the substituted amines such as N,N-dialkylalkanolamines, N-alkyldialkanolamines and trialkanolamines. N-methyldiethanolamine and N,N-dimethylethanolamine are most

preferred. Such combinations of alpha diketones and amines to form photosensitizing systems will be recognized by those skilled in the art to be especially preferred for use in photopolymerizable adhesives which are to be polymerized by visible light.

The adhesives of this invention may also be polymerized by ultraviolet light. For such ultraviolet light polymerization, ultraviolet light sensitizing systems should be included. Those skilled in the art will recognize that numerous ultraviolet light sensitizing systems are known including numerous aromatic, ketonic and other families of compounds. One such family is represented by the formula:

IV. 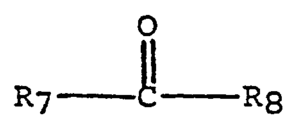

where $R_7$ and $R_8$ may be the same or different and may be alkyl or aryl. Other sensitizers include benzoin alkyl ethers, which are preferred. Thus, the methyl, ethyl, propyl, etc. benzoin ethers may be employed. Benzoin methyl, ethyl, and isopropyl ethers have been found to be preferred. Also preferred, are benzoin ketals such as benzoin dimethylketal and analogous species. These may also be considered to be benzoin alkyl ethers.

According to certain preferred embodiments of this invention, the photosensitizing system may comprise mixtures of ultraviolet and visible light sensitizing systems. Thus,

for example, an alpha diketone and amine may be combined with a benzoin ether to form a broad spectrum photosensitizing system.

According to a preferred embodiment of this invention, the photosensitizing system is supplemented by the addition of a polymerization promoter. Such promoter may be of the type that those skilled in the art will recognize is frequently employed in thermal polymerization systems. Accordingly, such promoters may comprise peroxides and other radical reaction promoting compounds; peroxides have been found to be preferred. Peroxides which have been found to be preferred include benzoyl peroxide, di-tert-butyl peroxide and others. Accordingly, amounts of peroxide or other species which are effective to promote the polymerization of the polymerizable adhesives of the present invention may be included in the photopolymerization system. When included in the photosensitizing systems of the invention, the promoter species are added in an amount effective to increase substantially the rate of the photopolymerization reaction. In general, promoters may be added in an amount of from about 0.1% to about 2% of the weight of the polymerizable resin.

The photosensitizing systems are present in the polymerizable adhesives of this invention in amounts effective to cause polymerization of the adhesive when the adhesive is exposed to actinic light of suitable wavelength. In general,

such photosensitizing systems comprise from about 0.3% to about 8% of the total weight of the polymerizable adhesive. It is more preferred to employ such photosensitizing systems in amounts of from about 0.4% to about 6% of such total weight. It should be appreciated that the best measure of the appropriate amount of components of a photosensitizing system according to the present invention is that amount which is effective in causing polymerization of the adhesive when such adhesive is exposed to actinic light.

The polymerizable compositions useful in the process of the invention may also comprise inorganic fillers, organic fillers, pigments, colors, dyes, surface active agents, opacifiers, radioopaquing agents, and other modificants. Accordingly, it may be preferred in the practice of certain embodiments of this invention to admix the polymerizable adhesives of this invention with various amounts of fillers or other modificants. Thus, the adhesives may be admixed with fillers such as, for example, silica, quartz, etc. in weight ratios of up to about 1:6. It is frequently desirable to add fillers to the adhesives of this invention in amounts sufficient to render the compositions thixotropic so as to promote ease of handling and good physical properties. Accordingly, filled compositions may be formulated having up to about 80% by weight of filler or other modificant. Such filled or otherwise modified compositions are within the scope of this invention.

For certain fixturing proceses of the invention, filling of the actinic light polymerizable compositions is preferred. Thus, for fixturing the lamp of Fig. 1 to 3 a composition having a resin to filler ratio of about 1:3-1:5 is preferred. For fixturing of waveguide arrays such as that of Figs. 4 and 5, unfilled or sparingly filled compositions (up to about 1:1) are preferred.

In general, the compositions preferred for use in the processes of this invention may be formulated by mixing together the selected components. Accordingly, it is generally necessary only to mix the silaneous species together with the non-silaneous polymerizable compounds (if any) and to add thereto the selected photosensitizing system, along with the optional fillers, pigments, and other modificants. Thereafter, it is usually helpful to degas the formulation and/or allow the formulation to stand for from about 6 hours to about 7 days to allow full homogenization and dispersion of the components of the mixture. Although these compositions are light curable, preparation and storage away from incidental light is usually not necessary due to their remarkable stability to low light levels.

In use, the materials of this invention are simply dispensed as desired and exposed to light of the appropriate wavelength at a convenient, effective intensity greater than ambient, when polymerization is desired. Accordingly, either visible, ultraviolet or broad spectrum light, depending upon the photosensitizing system selected, is directed to the dispensed composition for a time effective to allow the composition to polymerize. This may be done using any convenient light source. Thus, a visible light curing unit, such as the PRISMA-LITE™ unit of the L.D. Caulk Company, may be used to expose visible light curable compositions. The Caulk NUVA-LITE® source may be used for ultraviolet polymerization of the compositions used in the processes of this invention having ultraviolet photosensitizing systems. In general, it is necessary only to expose the compositions of this invention to relatively low levels of irradiation in order to secure polymerization. Thus, typical formulations may be exposed to 0.4 watt/$cm^2$/sec. visible light (400-500 nm) for from about 10 seconds to about 30 seconds to effect cures of up to about 6 millimeters in depth.

While the silaneous adhesive compositions of the Koblitz et. al. invention Serial No. 233,951 described in summary above, are preferred for use in the fixturing and repairing processes of this invention, those skilled in the

art will appreciate that numerous other actinic light polymerizable compoistions may also be so employed without deviating from this invention. Thus, numerous acrylic, methacrylic, etc., urethane, vinyl, styryl, etc. resins may be so employed above or in combination. Additionally, numerous photosensitizing systems may be employed as desired. The only requirement is that the actinic light polymerizable compositions be capable of rapid and efficient polymerization upon irradiation with non-ambient actinic light.

## CLAIMS

1. A process for fixturing a first object relative to a second object comprising contacting said first object and said second object with at least one portion of an actinic light polymerizable composition,

positioning said objects relative to each other to attain a preselected spatial orientation, and irradiating said portion with actinic light for a time sufficient to cause said composition to polymerize thereby fixedly maintaining said preselected orientation.

2. The process of claim 1 wherein said preselected spatial orientation is part of an optical pathway.

3. A process for assemblying a lamp from a bulb portion and a base portion comprising placing said bulb and said base proximate to each other, contacting both said bulb and said base with at least one portion of an actinic light polymerizable composition, positioning said bulb and said base relative to each other to attain a preselected

spatial orientation and directing actinic light upon said portion for a time sufficient to polymerize said composition thereby fixedly maintaining said preselected orientation.

4. The process of claim 1 or 3 wherein said positioning step precedes said contacting step.

5. A process for fixturing an array of waveguides comprising placing said guides on a mandrel in a preselected spatial orientation, applying to said guides at least one portion of an actinic light polymerizable composition, and exposing said composition to actinic light for a period of time sufficient to polymerize said composition thereby fixedly maintaining said preselected orientation.

6. The process of claim 5 wherein said applying step precedes said placing step.

7. The process of claim 5 further comprising removing the fixtured array from said mandrel.

8. The process of claim 5 wherein said mandrel has spacing means for said waveguides.

9. A process for fixturing an array of waveguides comprising positioning said guides in a preselected spatial orientation, contacting said array with at least one portion of an actinic light polymerizable composition, and exposing said composition to actinic light for a time sufficient to cause polymerization of said composition thereby fixedly maintaining said preselected orientation.

10. The process of claim 9 wherein said contacting step precedes said positioning step.

11. The process of claim 5 or 9 wherein said array is embedded in said composition.

12. The process of claim 9 wherein said light is actinic light.

13. The process of claim 1 or 3 or 9 wherein said time is from about 10 seconds to about 30 seconds.

14. A process for the repair of a waveguide or waveguide array having a structural void on a surface thereof comprising applying to said void

an actinic light polymerizable composition, and exposing said composition to actinic light for a time sufficient to cause polymerization of said composition whereby said void is substantially filled with said polymerized composition.

15. The process of claim 1, 3, 5 or 14 wherein said light is visible light.

16. The process of claim 14 wherein said composition is unfilled.

FIG. 1

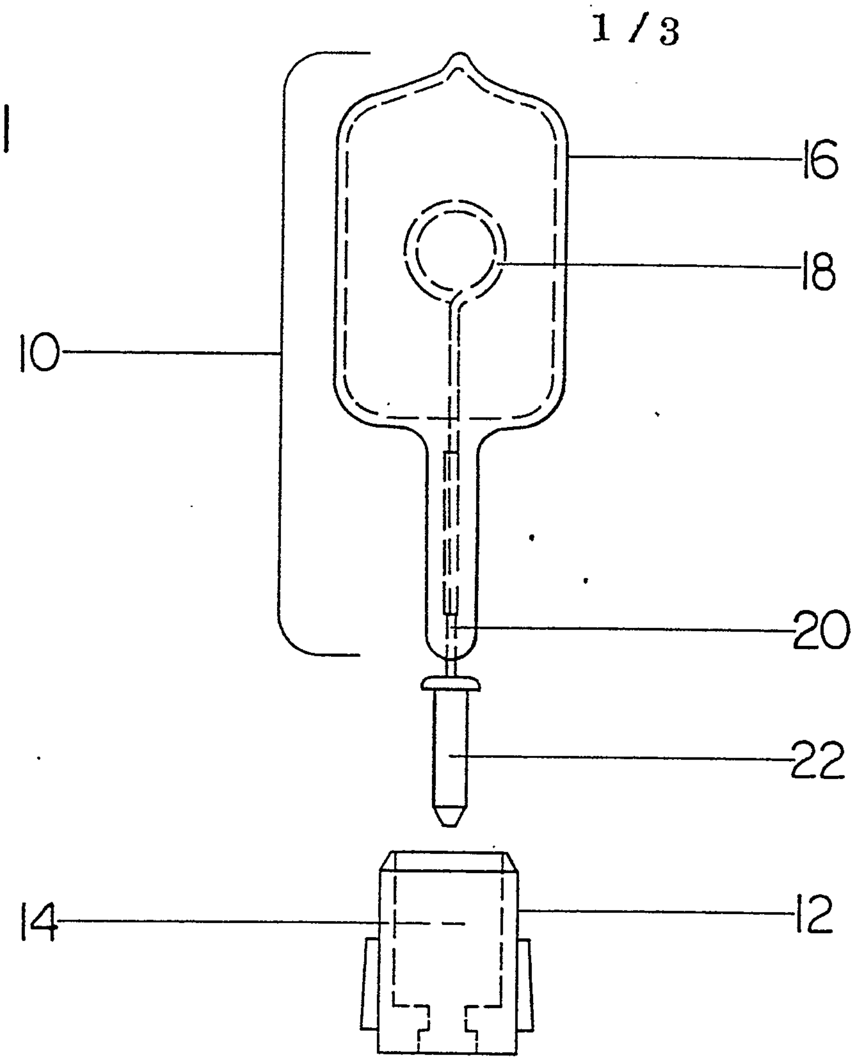


FIG. 2

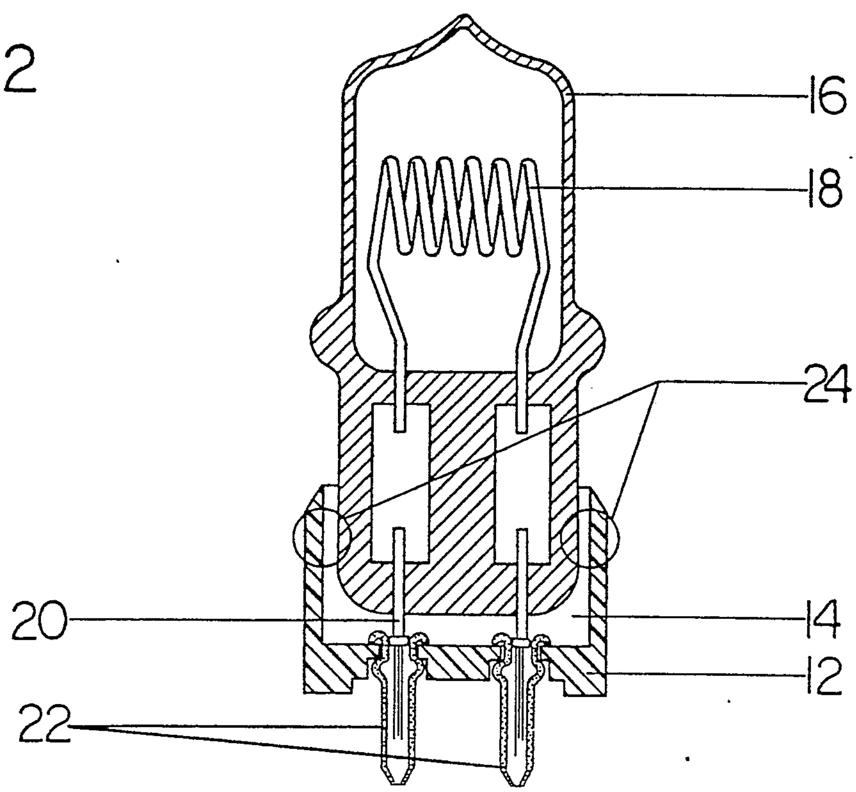

FIG. 3

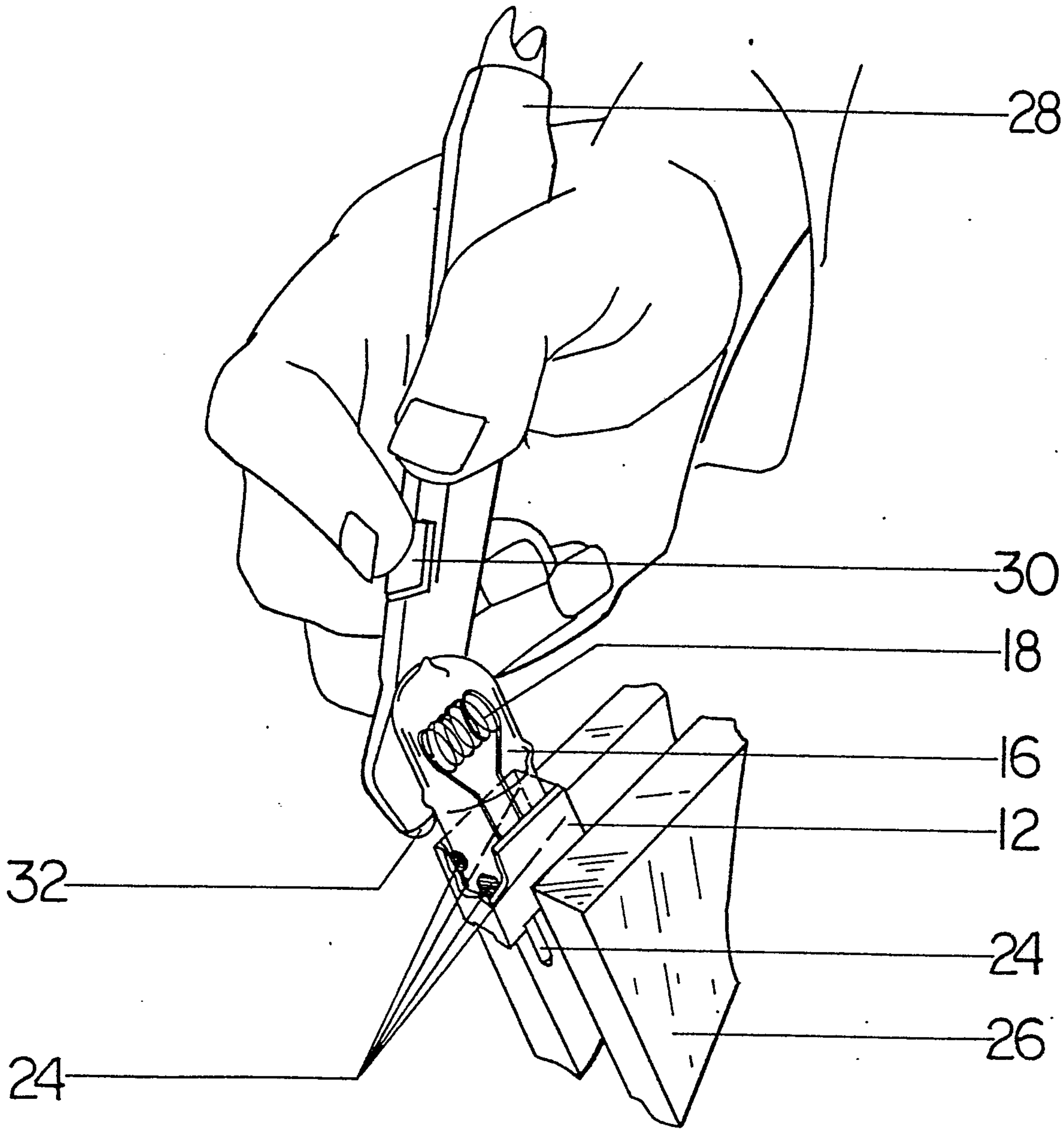

FIG. 4

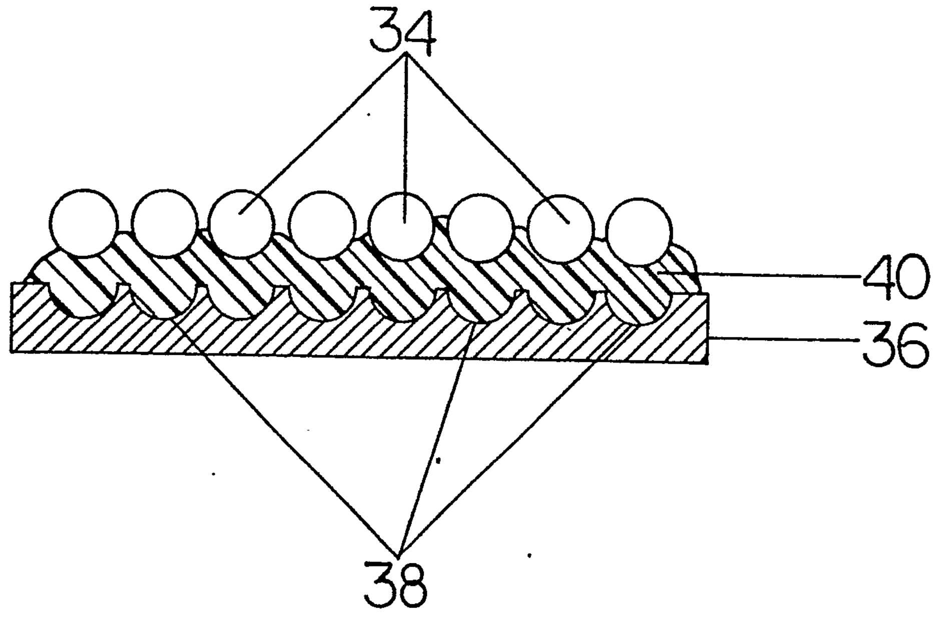


FIG. 5